# EUROPEAN PATENT APPLICATION

(11) **EP 3 001 330 A1**
(43) Date of publication of application: **30.03.2016**
(21) Application number: 14801476.4
(22) Date of filing: 20.05.2014
(51) Int. Cl.: G06F 17/30

(54) **DATA PROCESSING DEVICE AND METHOD**

(30) Priority: 21.05.2013 JP 2013107262
(71) Applicant: Kabushiki Kaisha Toshiba, Minato-ku Tokyo 105-8001 (JP)
(72) Inventor: WANG, Lan, Minato-ku Tokyo 105-8001 (JP); MURAYAMA, Hiroshi, Minato-ku Tokyo 105-8001 (JP); TOMOE, Yoichi, Minato-ku Tokyo 105-8001 (JP); MAKINO, Shigeyuki, Minato-ku Tokyo 105-8001 (JP)
(74) Representative: Hoffmann Eitle
(86) International application number: PCT/JP2014/063377
(87) International publication number: WO 2014/189056

(57) **Abstract**

A data processing apparatus of an embodiment includes a storage device (18) configured to store an ontology including hierarchical classes, a property defined by each of the classes, in which each of the class and the property includes attributes of unique identification information and version information, and an instance creation unit (5) configured to create a data sheet used to input an instance of a predetermined class using a property defined by the predetermined class and including the identification information and the version information and a property inherited from a class of an upper layer of the predetermined class and including the identification information and the version information.

## Description

### Technical Field

Embodiments described herein relate to a data processing apparatus and method.

### Background Art

In EMS (Energy Management System) in the electric power field, mostly, multivendor equipment is introduced into the same system, and multivendor applications coexist according to the scale of the system. Additionally, different vendors need to share equipment data and exchange data between different applications.

IEC61970/61968 (CIM: Common Information Model) defines a "common data model" used by a power grid system to implement data communication and exchange between multivendors. This model is used as ontologies of EMS. For this common data model, however, data modeling is done using UML (Unified Modelling Language), and the entire model is managed using one piece of version information.

However, as the CIM of common data model, there exist models in a plurality of versions such as versions 1.0, 2.0, and 3.0 at the present time. The CIM defines data models for a wide range of activities such as generation, transformation, transmission, and distribution of electricity. However, the fact is that only limited definitions are available for actual electric power systems.

In addition, it is unclear as to which versions the models used by individual applications to define and manage instance data are based on. Version information of a model (ontology) used to exchange data with another application or system is also undefined. It is therefore difficult to automatically and correctly exchange instance data.

Concerning data exchange between different electric power systems, a data exchange method using XML (Extensible Markup Language) is usable. This method defines a method of exchanging instance data using a class to do data exchange and the property name or URL (Uniform Resource Identifier) of the class. In this method, however, version information is indefinite, as described above, because individual classes or properties have no version information. It is therefore difficult to automatically and correctly exchange instance data.

### [Prior Art Reference]

### [Patent Literature]

[Patent Literature 1]
Jpn. Pat. Appln. KOKAI Publication No. 2006-31577

### Summary of Invention

It is an object of the present invention to provide a data processing apparatus and method capable of creating an instance including ontologies in a plurality of versions.

A data processing apparatus of an embodiment includes a storage device configured to store an ontology including hierarchical classes, a property defined by each of the classes, in which each of the class and the property includes attributes of unique identification information and version information, and an instance creation unit configured to create a data sheet used to input an instance of a predetermined class using a property defined by the predetermined class and including the identification information and the version information and a property inherited from a class of an upper layer of the predetermined class and including the identification information and the version information.

### Brief Description of Drawings

FIG. 1 is a block diagram showing an example of the arrangement of a data processing apparatus according to an embodiment;
FIG. 2 shows views of examples of ontologies managed by a data processing apparatus according to the first embodiment;
FIG. 3 shows views of examples of ontologies managed by a data processing apparatus according to the first embodiment;
FIG. 4 shows views illustrating examples of objects of unit classes managed by the data processing apparatus according to the first embodiment;
FIG. 5 is a view for explaining instance data transformation between ontologies in a plurality of versions by a data processing apparatus according to the second embodiment;
FIG. 6A is flowchart showing an example of an instance data transformation rule creation procedure by the data processing apparatus according to the second embodiment;
FIG. 6B is flowchart showing an example of an instance data transformation rule creation procedure by the data processing apparatus according to the second embodiment;
FIG. 7 is a view showing, using a table format, examples of instance transformation rules generated by the data processing apparatus according to the second embodiment;
FIG. 8A is flowchart showing an example of an instance transformation procedure by the data processing apparatus according to the second embodiment;
FIG. 8B is flowchart showing an example of an instance transformation procedure by the data processing apparatus according to the second embodiment;
FIG. 9 is a view showing, using a table format, examples of instances before transformation and instances after transformation by the data processing apparatus according to the second embodiment;
FIG. 10 is a view showing an example of an instance transformation by the data processing apparatus according to the second embodiment;
FIG. 11 shows views illustrating, using a table format, examples of a plurality of instance data sheets managed by the data processing apparatus according to the third embodiment;
FIG. 12 is a view showing an example of the subsumption relationship between difference classes defined by a data processing apparatus according to the fourth embodiment;
FIG. 13 shows views illustrating, using a table format, examples of various kinds of instance data sheets defined by a data processing apparatus according to the fifth embodiment;
FIG. 14 shows views illustrating, using a table format, examples of instance data sheets defined by a data processing apparatus according to the sixth embodiment; and
FIG. 15 shows an example of setting for generating a database table to be generated by a data processing apparatus according to the seventh embodiment.

### Mode for Carrying Out the Invention

The embodiments will now be described with reference to the accompanying drawings.

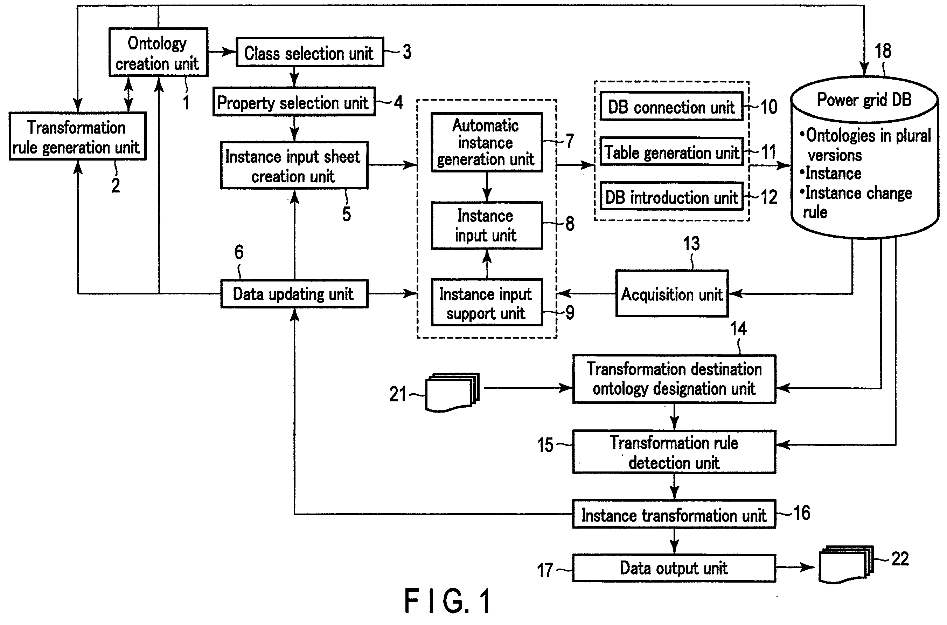

FIG. 1 is a block diagram showing an example of the arrangement of a data processing apparatus according to an embodiment.

In this embodiment, ontologies are defined for common data models in a plurality of versions defined by IEC61970/61968. IEC61970/61968 defines equipment, measurement values, connection information, and the like managed by a power grid system (EMS).

As shown in FIG. 1, the data processing apparatus according to the embodiment includes an ontology creation unit 1, a transformation rule generation unit 2, a class selection unit 3, a property selection unit 4, an instance input sheet creation unit 5, a data updating unit 6, an automatic instance generation unit 7, an instance input unit 8, an instance input support unit 9, a DB connection unit 10, a table generation unit 11, a DB introduction unit 12, an acquisition unit 13, a transformation destination ontology designation unit 14, a transformation rule detection unit 15, an instance transformation unit 16, a data output unit 17, and a power grid DB 18. The functions of these units will be described in each embodiment.

### (First Embodiment)

The first embodiment will be described next.

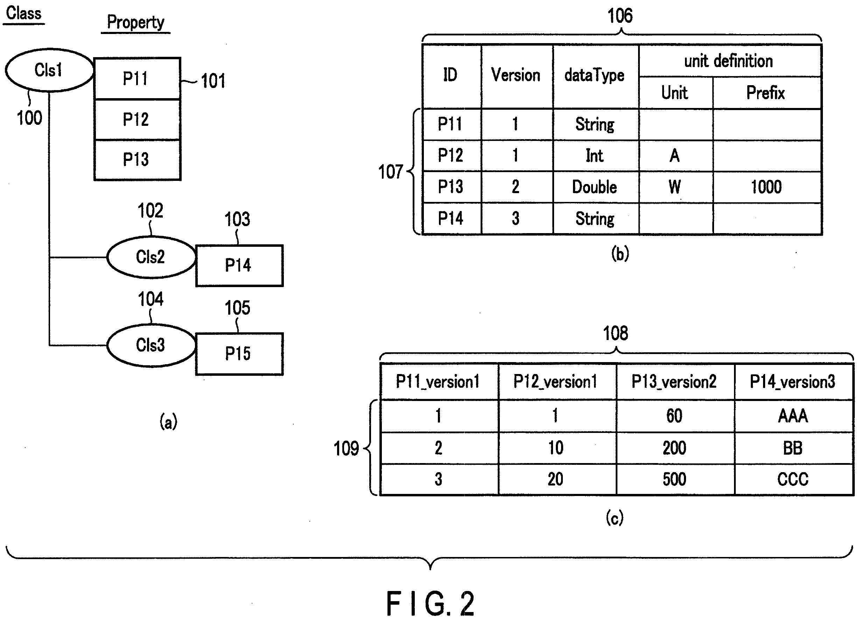

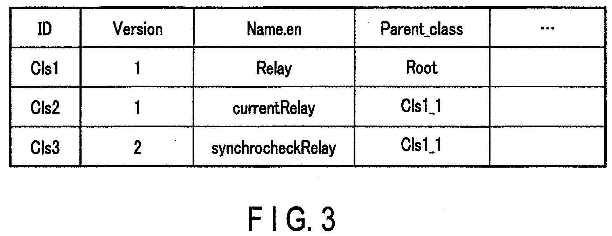

FIGS. 2 and 3 show views of examples of ontologies managed by a data processing apparatus according to the first embodiment. The pieces of ontology information are stored in a power grid DB 18. The power grid DB 18 is a storage device, for example, a hard disk drive or a nonvolatile memory.

As the identification information of an ontology according to the first embodiment, a unique ID including version information is usable.

In this embodiment, hierarchical classes, defined property sets of individual classes, and objects of unit classes are defined in an ontology. In the example shown in FIG. 2, the class at the top is a class 100 with an ID "Cls1". Subclasses of this class are a class 102 with an ID "Cls2" and a class 104 with an ID "Cls3".

A defined property set 101 of the class 100 with the ID "Cls1" is a set of a property with an ID "P11", a property with an ID "P12", and a property with an ID "P13".

The defined property of the class 102 with the ID "Cls2" is a property 103 with an ID "P14". The defined property of the class 104 with the ID "Cls3" is a property 105 with an ID "P15". The subclasses inherit the properties from the superclass.

As shown in FIG. 3, an attribute set including a unique ID (for example, Cls1), a version, a name (Name.en), a superclass (Parent_class), and the like is defined for each class. Each property is defined using an attribute set including a unique ID (for example, P11), a version, a data type, a unit (unit), a prefix of the unit (Prefix), a definition class, and the like. In FIG. 2, (a) shows a defined attribute example 106 of properties.

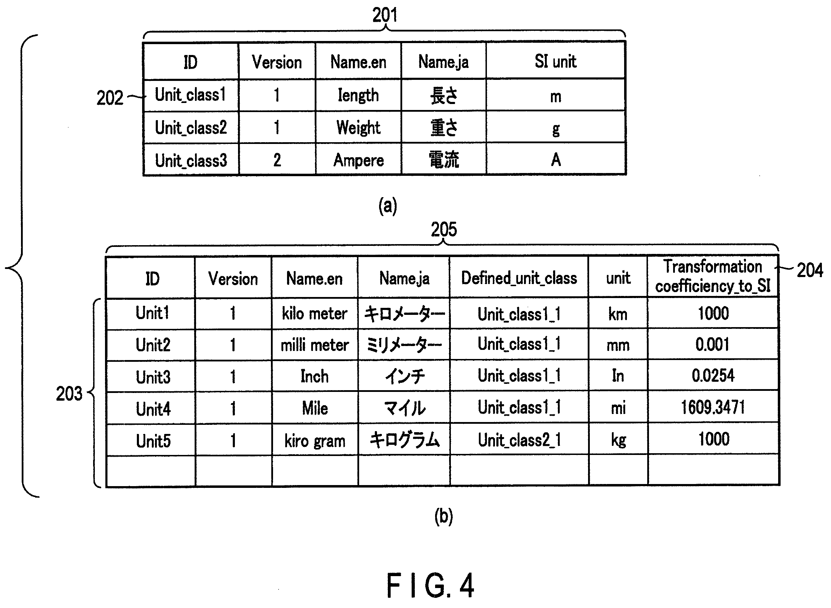

FIG. 4 shows views illustrating examples of objects of unit classes managed by the data processing apparatus according to the first embodiment.

In the first embodiment, as shown in (a) of FIG. 4, attribute sets shown in a table 201 are provided for individual unit classes. This table defines attributes such as a unique ID (for example, Unit_class1), a version, names (Name.en and Name.ja), and an SI unit (SI unit). The SI unit is assumed to be the basic unit of a defined unit class.

For example, a unit class "length" indicated by an object 202 of a unit class in the table 201 is defined using meter (m) that is an SI unit as the basic unit.

Units other than the SI unit are defined as the instances of the unit class and describe transformation coefficients to the basic unit. A table 205 shown in (b) of FIG. 4 shows an example of a unit instance definition table.

The table 205 defines a unique ID (for example, Unit1), a version, names (Name.en and Name.ja), a class (Defined_unit_class) as a definition source in the table 201, and a unit name (unit) as an instance 203 of a unit class (for example, Unit_class1). For example, the instances of the unit class "length" define kilometer (km), millimeter (mm), inch (In), and the like.

Each instance 203 in the table 205 describes a transformation relationship (Transformation coefficiency_to_SI) 204 to the SI unit (for example, m) that is the basic unit of length.

In the examples shown in (a) and (b) of FIG. 4, the unit class definition table and the unit instance definition table are separated. However, the present invention is not limited to this. The unit class definition table and the unit instance definition table may be integrated into one table in which the unit class definition and the unit instance definition are made distinguishable.

In this embodiment, creation of an instance data sheet (data table) will be described. An instance data sheet is a data sheet used to describe instance data. The instance data sheet is created using both the defined properties of classes and properties inherited from a superclass.

An operation based on the example shown (c) of FIG. 2 will be described. In this example, an ontology creation unit 1 activates a class selection unit 3. The class selection unit 3 selects a target class (here, the class with the ID "Cls2"), and activates a property selection unit 4. The property selection unit 4 selects the property (ID with version information: P14_version3) defined by the class with the ID "Cls2", and activates an instance input sheet creation unit 5. Using this property and the properties (IDs with version information: P11_version1, P12_version1, and P13_version2) inherited from the superclass (ID: Cls1) of the ID "Cls2", the instance input sheet creation unit 5 creates the instance data sheet of the class with the ID "Cls2". The instance input sheet creation unit 5 can save the instance data sheet in the power grid DB 18.

In FIG. 2, (c) shows an example of an instance data sheet 108 of the class "Cls2". The thus created instance data sheet has identification information using the ID and version information of the class. For example, in this instance data sheet, the class ID and the version information are connected by an underbar to obtain "Cls2_1".

The created instance data sheet can be classified into a plurality of types by the class type. In this data sheet, instance data of a corresponding type can be input. The input is done using an instance input unit 8, for example, an input device (not shown) and Excel^{®} provided by Microsoft, or the like. As shown in (c) of FIG. 2, the instance data sheet 108 is a data sheet in which instance data 109 can be input.

In the first embodiment, an instance data sheet including ontologies in a plurality of versions can be created in the above-described way.

### (Second Embodiment)

The second embodiment will be described next. Note that in the following embodiments, a detailed description of components that are the same as in FIG. 1 will be omitted.

In the second embodiment, procedures of instance transformation rule creation and instance transformation will be described.

In the second embodiment, a created ontology is discriminated from other ontologies using one ID (for example, CIMModel_1). An ontology in another version (for example, the ID is CIMModel_2) is assumed to be created using the same structure.

In this embodiment, data including instance data input to instance data sheets created in the above-described way using created ontologies in a plurality of versions are saved in a power grid DB 18. A transformation rule generation unit 2 creates a transformation rule of instance data between ontologies in different versions. The transformation rule generation unit 2 saves the transformation rule in the power grid DB 18.

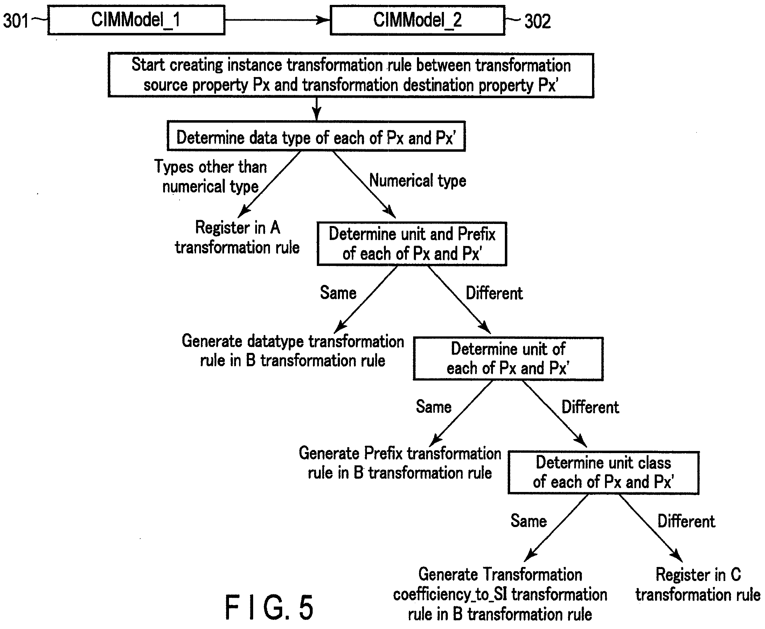

FIG. 5 is a view for explaining instance data transformation between ontologies in a plurality of versions by a data processing apparatus according to the second embodiment.

As shown in FIG. 5, an instance transformation unit 16 transforms instance data between ontologies in two versions using a transformation rule saved in the power grid DB 18. Creating a transformation rule of instance data from a transformation source ontology to a transformation destination ontology will be explained here assuming that the ID of the transformation source ontology is CIMModel_1, and the ID of the transformation destination ontology is CIMModel_2.

Instance transformation rules are classified into A type transformation rules, B type transformation rules, and C type transformation rules.

An A type transformation rule is a transformation rule common to all versions. A B type transformation rule is a transformation rule that allows transformation between, for example, a version X and a version Y. A C type transformation rule is a rule unique to a specific version, that is, a rule indicating that transformation is impossible between different ontologies.

The A type transformation rule is applied to only properties and described in a list "all_version_common".

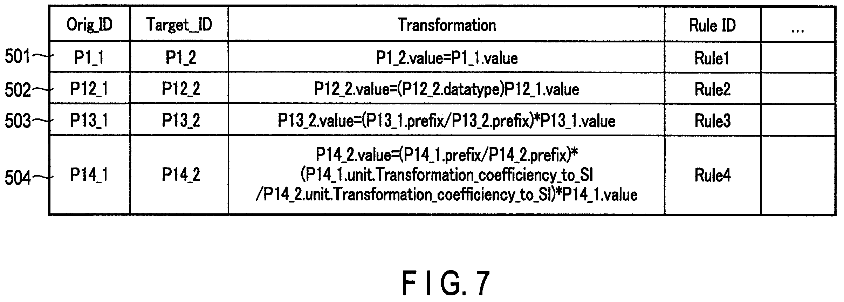

The B type transformation rule is applied to properties. For each property, a transformation rule of corresponding instance data is generated as a B type transformation rule and saved in the power grid DB 18. This transformation rule is saved in a table shown in FIG. 7 (to be described later).

The table name of the table that saves these transformation rules includes the ID of the transformation source ontology and the ID of the transformation destination ontology. In this arrangement, a rule applied to transform the instance data of the transformation source ontology can be detected from the above-described table using the corresponding ID at the time of instance transformation.

A transformation target using the C type transformation rule will be described. In this transformation rule, classes are described in, for example, a list with a name "CIMModel1_not_to_CIMModel2_Class". Properties are described in, for example, a list with a name "CIMModel1_not_to_CIMModel2_Property". As described above, the identification information name of each list includes the ID of the transformation source ontology and the ID of the transformation destination ontology.

In this arrangement, a rule applied to transform the instance data of the transformation source ontology can be detected using the name of the list at the time of instance transformation.

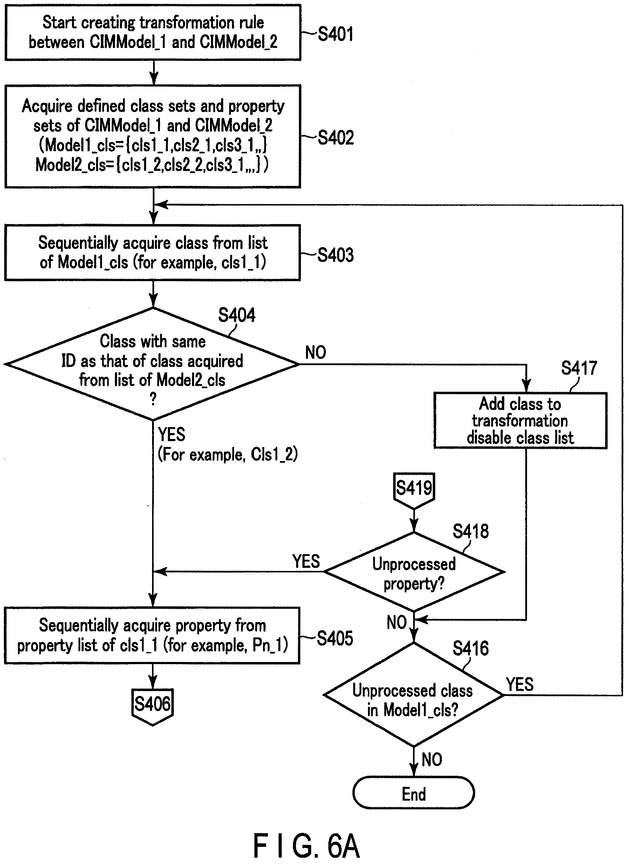

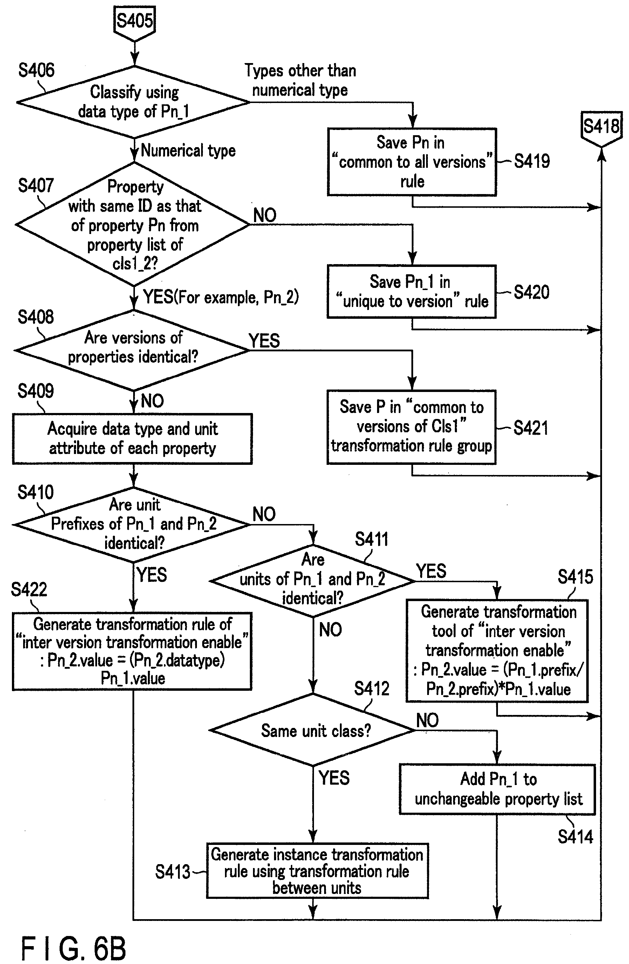

FIGS. 6A and 6B are flowcharts showing an example of an instance data transformation rule creation procedure by the data processing apparatus according to the second embodiment. First, the transformation rule generation unit 2 acquires the list of defined classes of the transformation source ontology (ID: CIMModel_1), the list of defined classes of the transformation destination ontology (ID: CIMModel_2), and the defined property lists of individual classes from the power grid DB 18 (step S402).

The defined class lists will be explained. For example, an example of the list of defined class of the transformation source ontology (list of class IDs with versions) is described as follows. This list will sometimes be referred to as a class list hereinafter.

### Model1_cls{cls1_1, cls2_1, cls3_1, cls4_2, cls5_3,...}

An example of the class list of the transformation destination ontology is as follows.

### Model2_cls{cls1_2, cls2_2, cls3_2, cls4_2, cls5_4, ...}

The defined classes including "Model1_cls" are defined classes for which the transformation source ontology ID is CIMModel_1. The defined classes including "Model2_cls" are defined classes for which the transformation destination ontology ID is CIMModel_2. In these defined class, a class ID with version information uses a class ID and class version information. A class ID with version is formed by, for example, connecting the ID of a class and the class version information of the class by an underbar. For example, "cls2_1" indicates that the class ID is "cls2", and the version of the class is 1.

The defined property lists of individual classes will be described here. For example, the defined property list of a class having a class ID "cls1_1" with version in the above list is, for example, "cls1_1_P{P1_1, P2_1, P3_1, ...}". A property ID with version in the list format (in {}) of these defined classes is formed by connecting the ID of a property and the version of the property by an underbar. For example, "P1_1" indicates that the property ID is "P1", and the version of the property is 1. As described above, a defined property list 106 as shown in (b) of FIG. 2 includes an attribute set of a property ID, version information, a data type, a unit, prefix information, and the like. As a prefix, a multiplier of 10 can be described for a unit.

Next, to generate the transformation rule of the instance of each class, the transformation rule generation unit 2 selects one class ID with version (for example, cls1_1) in the class list of the transformation source ontology ID "CIMModel_1", which is the class ID acquired in step S402. The transformation rule generation unit 2 acquires the selected class ID from the power grid DB 18 (step S403).

The transformation rule generation unit 2 determines whether the class ID represented by the class ID with version in the class list acquired in step S403 also exists among the class IDs with version in the class list (Model2_cls{...}) of the transformation destination ontology (step S404). In this determination, only the class ID of the class ID with version is used. The version is not used for determination.

If a class having an ID that is the same as the class ID in the class list acquired in step S403 is not defined in the class list (Model2_cls{...}) (NO in step S404), the transformation rule generation unit 2 adds the class ID with version selected in step S403 to an instance transformation disable class list (step S417). The instance transformation disable list with the class ID with version added is, for example, "CIMModel1_not_to_CIMModel2_Class{cls20_1, Cls30_1,...}. This instance transformation disable class list is stored in the power grid DB 18.

On the other hand, in the above-described class list (Model2_cls{...}) of the transformation destination ontology, a class ID with version (cls1_2) is defined. This class ID with version (cls1_2) is an ID that includes the ID "cls1" in the class ID with version "cls1_1" acquired in step S403 as described above but in a different version.

This means that a class having the same ID as the class ID in the class list acquired in step S403 is defined in the class list (Model2_cls{...}) of the transformation destination ontology (YES in step S404). In this case, the transformation rule generation unit 2 acquires the defined property list of the class indicated by the class ID with version selected in step S403 from the power grid DB 18.

If the class ID with version selected in step S403 is "cls1_1", the defined property list of the class is, for example, "cls1_1_P{P1_1, P2_1, P3_1, ...}".

To create an instance transformation rule, the transformation rule generation unit 2 selects one of property IDs with version in the acquired property list, and acquires the selected property ID with version from the power grid DB 18 (step S405). If the defined property list is "cls1_1_P{P1_1, P2_1, P3_1, ...}" as described above, for example, a property ID with version "Pn_1 (n is a variable)" is acquired from the power grid DB 18.

The transformation rule generation unit 2 reads out, from the power grid DB 18, the data type of a property corresponding to the property ID with version (for example, "Pn_1") acquired in step S405, and classifies the readout data type (step S406).

If the data type is not a numeric type (for example, data that describes a numerical value such as int, real, or double), the transformation rule generation unit 2 registers the property ID (for example, Pn) in the property ID with version (for example, Pn_1 described above) selected in step S405 in the list all_version_common of instance transformation rule classification "common to all versions" (step S419). This list indicates that an instance can be applied from the transformation source to the transformation destination ontology without transformation. Using this list, an instance of a class of a transformation source in a certain version can be applied to an instance of the class in another version without transformation for all versions of the property (ID: Pn).

If the data type is a numeric type, the transformation rule generation unit 2 reads out, from the power grid DB 18, the property ID (Pn) in the property ID with version (for example, Pn_1) of the class corresponding to the transformation source ontology selected in step S405 from the defined property list of, for example, "cls1_2" detected in step S404. The transformation rule generation unit 2 determines whether a property having the same property ID as the readout property ID is defined in the same class corresponding to the transformation destination ontology (step S407).

If the property is not defined in the same class corresponding to the transformation destination ontology (NO in step S407), this means that the property corresponding to the property ID with version (for example, Pn_1) in the model of the transformation source ontology selected in step S404 is not defined in the model of the transformation destination ontology. For this reason, the instance of the class that defines the property cannot be saved in the transformation destination ontology.

Hence, the transformation rule generation unit 2 registers the property ID with version (for example, Pn_1) selected in step S405 in a property list "unique to a specific version" (for example, CIMModel1_not_to_CIMModel2_Property) that is the C type transformation rule stored in the power grid DB 18 (step S420). This list can also be called a transformation disable property list.

If the property is defined in the same class corresponding to the transformation destination ontology (YES in step S407), the transformation rule generation unit 2 determines whether the property ID with version of the class corresponding to the transformation source ontology selected in step S404 and the ID detected in step S407 have the same version (step S408). The ID detected in step S407 is a property ID with version having the same property ID in the same class corresponding to the transformation source ontology.

If the IDs have the same version (YES in step S408), the transformation rule generation unit 2 registers the transformation rule (for example, "Pn_2.value = Pn_1.value") between the transformation source property and the transformation destination property in an instance transformation rule management table (step S421). The instance transformation rule management table is stored in the power grid DB 18. When the transformation rule generation unit 2 registers the transformation rule in the instance transformation rule management table, an instance of a class that defines a property having a certain version in the transformation source ontology can be transformed into an instance of a class that defines a property having the same version in the transformation destination ontology.

FIG. 7 is a view showing, using a table format, examples of instance transformation rules generated by the data processing apparatus according to the second embodiment.

FIG. 7 shows an instance transformation rule 501 that is an example of a generated instance transformation rule. In FIG. 7, to discriminate between the property ID (Orig_ID) of the transformation source and the property ID (Target_ID) of the transformation destination, "_1" is added to the end of the property ID of the transformation source, and "_2" is added to the end of the same property ID of the transformation destination.

If the IDs do not have the same version (NO in step S408), the transformation rule generation unit 2 acquires information such as the data types, units, and prefixes of the transformation source property (for example, the property ID with version is Pn_1) and the transformation destination property (for example, the property ID with version is Pn_2) from the power grid DB 18 (step S409).

The transformation rule generation unit 2 determines whether the unit (unit) and prefix (Prefix) information defined by the transformation source property (for example, the property ID with version is Pn_1) acquired in step S409 and the unit and Prefix information defined by the transformation destination property (for example, the property ID with version is Pn_2) are the same between the transformation source property and the transformation destination property (step S410).

If the unit and Prefix information are the same between the transformation source property and the transformation destination property (YES in step S410), the transformation rule generation unit 2 reads out a data type used by the transformation source property and a data type used by the transformation destination property from the power grid DB 18. Using the readout result, the transformation rule generation unit 2 generates a transformation rule (for example, Pn_2.value = (Pn_2.datatype)Pn_1.value) that enables transformation between the transformation source property (for example, the property ID with version is Pn_1) and the transformation destination property (for example, the property ID with version is Pn_2) whose instances have different versions.

The transformation rule generation unit 2 registers the transformation rule in the instance transformation rule management table of the power grid DB 18 together with the property ID with version of the transformation source and the property ID with version of the transformation destination (step S422). The registration destination row of the same IDs and transformation rule as the IDs and transformation rule shown in FIG. 7 is a row corresponding to an instance 502 of the instance transformation rule management table.

This enables transformation from an instance of a class that defines a property having a certain version in the transformation source ontology to an instance of a class that defines a property having a different version in the transformation destination ontology.

If the unit and Prefix information are not the same between the transformation source property and the transformation destination property (NO in step S410), the transformation rule generation unit 2 determines whether the unit defined by the transformation source property (for example, the property ID with version is Pn_1) is the same as the unit defined by the transformation destination property (for example, the property ID with version is Pn_2) (step S411).

If the unit is the same between the transformation source property and the transformation destination property (YES in step S411), the transformation rule generation unit 2 reads out a unit prefix used by the transformation source property and a unit prefix used by the transformation destination property from the power grid DB 18. Using the readout result, the transformation rule generation unit 2 generates a transformation rule (for example, Pn_2.value = (Pn_1.prefix/Pn_2.prefix)*Pn_1.value) that enables transformation between the transformation source property (for example, the property ID with version is Pn_1) and the transformation destination property (for example, the property ID with version is Pn_2) whose instances have different versions.

The transformation rule generation unit 2 registers the transformation rule in the instance transformation rule management table of the power grid DB 18 together with the property ID with version of the transformation source and the property ID with version of the transformation destination (step S415). The registration destination row of the same IDs and transformation rule as the IDs and transformation rule shown in FIG. 7 is a row corresponding to an instance 503 of the instance transformation rule management table.

This enables transformation from an instance of a class that defines a property having a certain version and a certain unit in the transformation source ontology to an instance of a class that defines a property having a different version and the same unit in the transformation destination ontology.

If the unit is not the same between the transformation source property and the transformation destination property (NO in step S411), the transformation rule generation unit 2 determines whether the unit defined by the transformation source property (for example, the property ID with version is Pn_1) and the unit defined by the transformation destination property (for example, the property ID with version is Pn_2) are defined in the same unit class on a table as shown in FIG. 4 (step S412).

If the units are defined in the same unit class (YES in step S412), the transformation rule generation unit 2 reads out a unit "transformation relationship" (Transformation coefficiency_to_SI indicated by 204) and a unit prefix (prefix) used by the transformation source property and a unit "transformation relationship" and a unit prefix (prefix) used by the transformation destination property from the power grid DB 18. Using the readout result, the transformation rule generation unit 2 generates a transformation rule that enables transformation between the transformation source property (for example, the property ID with version is Pn_1) and the transformation destination property (for example, the property ID with version is Pn_2) whose instances have different versions.

The generated transformation rule is, for example,
Pn_2.value =
(Pn_1.prefix/Pn_2.prefix)*(Pn_1.unit.Transformation_coefficiency_to_SI/Pn_2.unit.Transformation_coefficiency_to_SI)*Pn _1.value).

The transformation rule generation unit 2 registers the transformation rule in the instance transformation rule management table of the power grid DB 18 together with the property ID with version of the transformation source and the property ID with version of the transformation destination (step S413). The registration destination row of the same IDs and transformation rule as the IDs and transformation rule shown in FIG. 7 is a row corresponding to an instance 504 of the instance transformation rule management table.

This enables transformation from an instance of a class that defines a property having a certain version and a certain unit in the transformation source ontology to an instance of a class that defines a property having a different version or unit in the transformation destination ontology.

If the units are not defined in the same unit class (NO in step S412), the transformation rule generation unit 2 determines that instance transformation cannot be performed between the transformation source property (for example, the property ID with version is Pn_1) and the transformation destination property (for example, the property ID with version is Pn_2).

The transformation rule generation unit 2 registers the transformation source property (for example, the property ID with version is Pn_1) in the transformation disable property list (for example, "CIMModel1_not_to_CIMModel2_Property") as the C type transformation rule stored in the power grid DB 18 (step S414).

After steps S413 and S414, the transformation rule generation unit 2 determines whether instance transformation rule creation processing for the class that defines each property in the property list of the class acquired in step S403 is completed (step S418).

If an unprocessed property exists (YES in step S418), the transformation rule generation unit 2 performs the processing from step S405 described above again.

If instance transformation rule creation processing for the class that defines each property is completed (NO in step S418), the transformation rule generation unit 2 determines whether all classes in the transformation source class list (for example, Model1_cls{...}) acquired in step S402 have been acquired in step S403 and undergone the processing from step S404 (step S416).

If an unprocessed class exists (YES in step S416), the transformation rule generation unit 2 performs the processing from step S403 again.

If the processing is compared for all classes (NO in step S416), the transformation rule generation unit 2 completes the processing of generating the instance transformation rule from an instance of the transformation source ontology (for example, the ID is CIMModel_1) to an instance of the transformation destination ontology (for example, the ID is CIMModel_2).

Detecting, by a transformation rule detection unit 15, a transformation rule to be applied to transform an instance using an instance transformation rule created in the above-described way will be described.

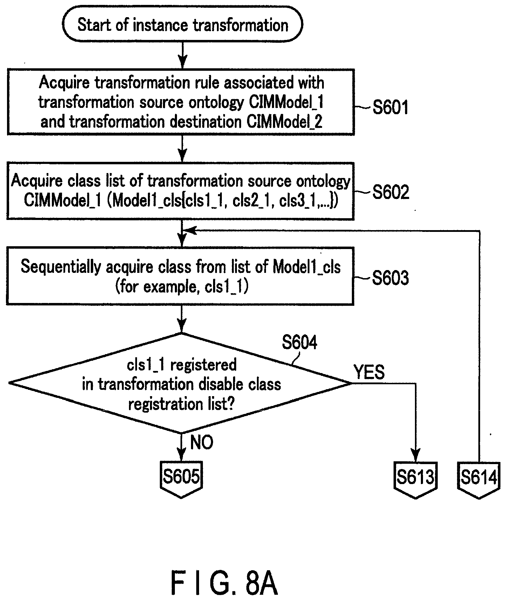

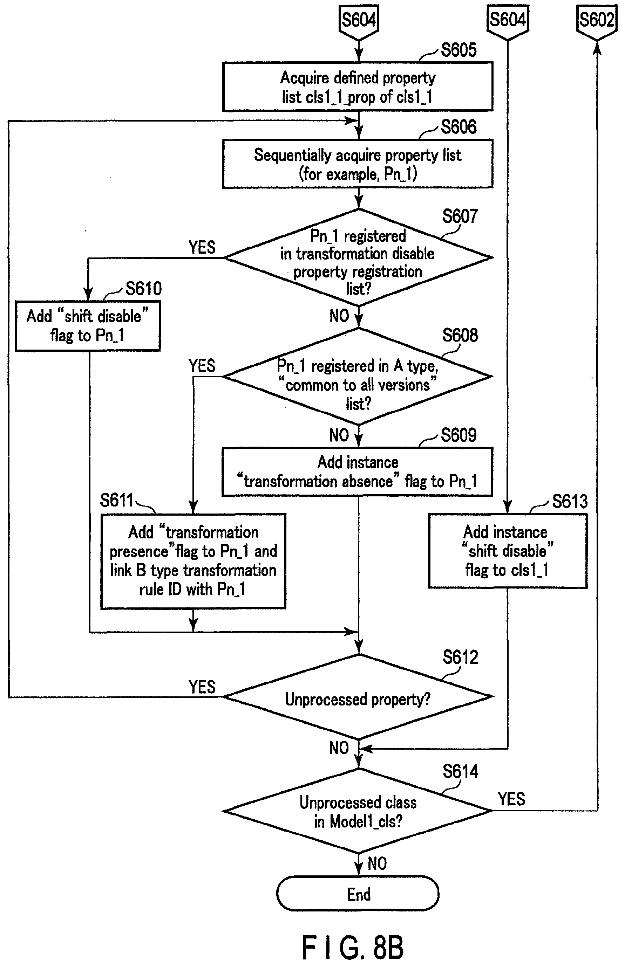

FIGS. 8A and 8B are flowcharts showing an example of an instance transformation procedure by the data processing apparatus according to the second embodiment.

An example of transformation from an instance of a transformation source ontology (the ID is CIMModel_1) to an instance of a transformation destination ontology (the ID is CIMModel_2) will be described.

First, a transformation destination ontology designation unit 14 designates a transformation destination ontology (for example, the ID is CIMModel_2) for the above-described transformation source ontology (for example, the ID is CIMModel_1). The transformation rule detection unit 15 acquires, from the power grid DB 18, all of various instance transformation rules from the above-described transformation source ontology (for example, the ID is CIMModel_1) to the transformation destination ontology (for example, the ID is CIMModel_2) (step S601).

The transformation rule detection unit 15 acquires the class list of the transformation source ontology (for example, the ID is CIMModel_1) from the power grid DB 18 (step S602). The acquired class list is, for example, Model1_cls{cls1_1,cls2_1,cls3_1,...}.

To detect the instance transformation rule for each class, the transformation rule detection unit 15 selects one class ID with version (for example, cls1_1) from the class list acquired in step S602. The transformation rule detection unit 15 acquires the selected class ID from the power grid DB 18 (step S603).

The transformation rule detection unit 15 determines whether the class ID with version (for example, cls1_1) acquired in step S603 is registered in the list (for example, CIMModel1_not_to_CIMModel2_Class) of the instance transformation rule (C type: "unique to a specific version") acquired in step S601 (step S604).

If the class ID with version is registered in the list (YES in step S604), the transformation rule detection unit 15 adds an instance "shift disable" flag to the class ID with version (for example, cls1_1) acquired in step S603. The transformation rule detection unit 15 completes instance transformation rule detection for this class (step S613).

If the class ID with version is not registered in the list (NO in step S604), the transformation rule detection unit 15 acquires a defined property list (for example, cls1_1_prop) of a class corresponding to the class ID with version (for example, cls1_1) acquired in step S603 (step S605).

To detect the transformation rule of each property data, the transformation rule detection unit 15 selects one property ID with version (for example, Pn_1) from the defined property list acquired in step S605. The transformation rule detection unit 15 acquires the selected property ID from the power grid DB 18 (step S606).

The transformation rule detection unit 15 determines whether the property ID with version (for example, Pn_1) acquired in step S604 is registered in the list (for example, CIMModel1_not_to_CIMModel2_Property) of the instance transformation rule (C type: "unique to a specific version") acquired in step S601 (step S607).

If the property ID with version is registered in the list (YES in step S607), the transformation rule detection unit 15 adds a data "shift disable" flag to the property ID with version (for example, Pn_1) acquired in step S603 (step S610).

If the property ID with version is not registered in the list (NO in step S607), the transformation rule detection unit 15 determines whether the property ID with version (for example, Pn_1) acquired in step S604 is registered in the list (for example, all_version_common) of the instance transformation rule (A type: "common to all versions") acquired in step S601 (step S608).

If the property ID with version is not registered in the list (NO in step S608), the transformation rule detection unit 15 adds an instance "transformation absence" flag to the property ID with version (for example, Pn_1) acquired in step S603 (step S609).

If the property ID with version is registered in the list (YES in step S608), the transformation rule detection unit 15 adds an instance "transformation presence" flag to the property ID with version (for example, Pn_1) acquired in step S603.

After adding the flag, the transformation rule detection unit 15 reads out, from the power grid DB 18, a transformation rule ID (for example, Rule1) corresponding to the property ID with version (for example, Pn_1) acquired in step S603 out of the B type transformation rules ("transformation presence") acquired in step S601. The transformation rule detection unit 15 links the readout ID with the property ID with version (for example, Pn_1) acquired in step S603 (step S611).

The transformation rule detection unit 15 determines whether a property that is not acquired in step S606, that is, an unprocessed property exists in the defined property list (for example, cls1_1_prop) acquired in step S605 (step S612).

If an unprocessed property exists (NO in step S612), the transformation rule detection unit 15 performs the processing from step S606 again for data transformation processing of the next property.

If the processing is completed for all properties (YES in step S612), the transformation rule detection unit 15 determines whether detection of the instance transformation rules of all classes of the transformation source ontology (for example, the ID is CIMModel_1) is completed (step S614).

If an unprocessed class exists (NO in step S614), the transformation rule detection unit 15 performs the processing from step S603 again.

If instance rule detection is completed for all classes (YES in step S614), processing of the transformation rule detection unit 15 is completed.

With the above-described processes of steps S601 to S614, the classes of the transformation source ontology (for example, the ID is CIMModel_1) can be classified into classes with the "shift disable" flag and other classes.

Automatic instance transformation cannot be performed for the classes with the "shift disable" flag. For this reason, they need to be discriminated from other classes as contents that need manual processing.

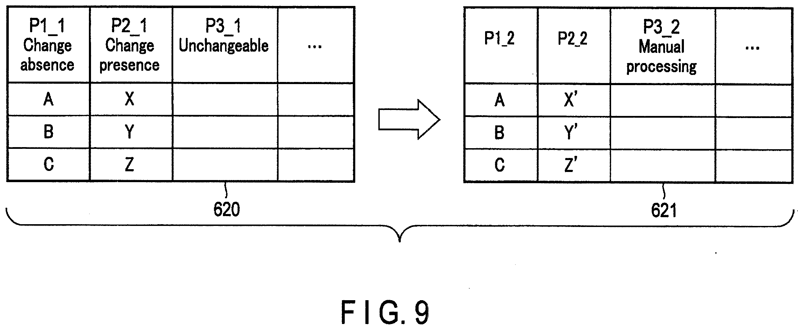

FIG. 9 is a view showing, using a table format, examples of instances before transformation and instances after transformation by the data processing apparatus according to the second embodiment.

As indicated by a table 620 shown in FIG. 9, one of three types of flags is added to the property of each class capable of automatic instance transformation. The flag of the first type is "transformation absence", the flag of the second type is "transformation presence" and a transformation rule ID, and the flag of the third type is "unchangeable (shift disable)".

For a property to which the "transformation absence" flag is added, the instance transformation unit 16 uses a method of directly describing an instance of a class that defines the property in the property corresponding to the transformation destination ontology.

For a property to which the "transformation presence" flag and the transformation rule ID are added, the instance transformation unit 16 applies a transformation corresponding to the transformation rule ID to an instance of a class that defines the property corresponding to the transformation source ontology. The instance transformation unit 16 thus creates an instance of a class that defines a property corresponding to the transformation destination ontology. The instance transformation unit 16 stores the instance of the class that defines the property corresponding to the transformation destination ontology in the power grid DB 18.

A data output unit 17 can output the instance of the class that defines the property corresponding to the transformation destination ontology to a display apparatus (not shown).

For a property to which the "unchangeable" flag is added, the instance cannot be transformed. For this reason, the instance transformation unit 16 determines that an instance 621 of a class that defines a property corresponding to the transformation destination ontology (for example, the ID is CIMModel_2) needs to be created by manual processing, as shown in FIG. 9. The instance transformation unit 16 discriminates this instance from other instances.

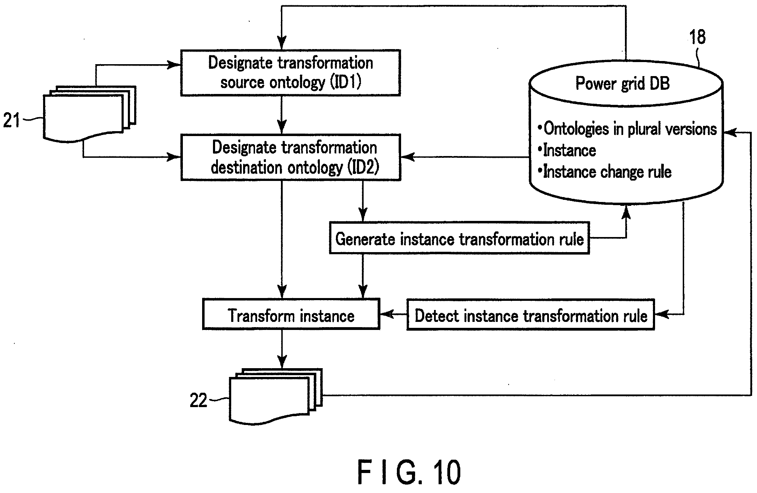

FIG. 10 is a view showing an example of an instance transformation by the data processing apparatus according to the second embodiment.

In the example shown in FIG. 10, the instance transformation unit 16 transforms the instance data of an ontology (for example, the ID is ID1) designated as a transformation source into an ontology (for example, the ID is ID2) designated as a transformation destination.

The transformation rule generation unit 2 generates the transformation rule between the transformation source ontology (ID1) and the transformation destination ontology (ID2) by the above-described method. The instance transformation unit 16 detects the generated transformation rule from the power grid DB 18. In accordance with this transformation rule, first, the transformation rule generation unit 2 directly describes an instance of a class that defines a property corresponding to the transformation source ontology in the property corresponding to the transformation destination ontology. Second, the transformation rule generation unit 2 applies a transformation corresponding to the transformation rule ID to the instance of the class that defines the property corresponding to the transformation source ontology. The transformation rule generation unit 2 thus obtains the instance of the class that defines the property corresponding to the transformation destination ontology.

If the transformation rule between the transformation source ontology (ID1) and the transformation destination ontology (ID2) is already created and saved in the power grid DB 18, the transformation rule detection unit 15 detects the transformation rule to be applied from the power grid DB 18. Using the transformation rule, the instance transformation unit 16 performs instance transformation from the transformation source ontology to the transformation destination ontology.

As described above, according to the second embodiment, it is possible to create the transformation rule of instance data between ontologies in different versions and transform the instance data using the transformation rule. Since this enables data transformation between different electric power systems, versatility of an electric power system can be improved.

### (Third Embodiment)

The third embodiment will be described next.

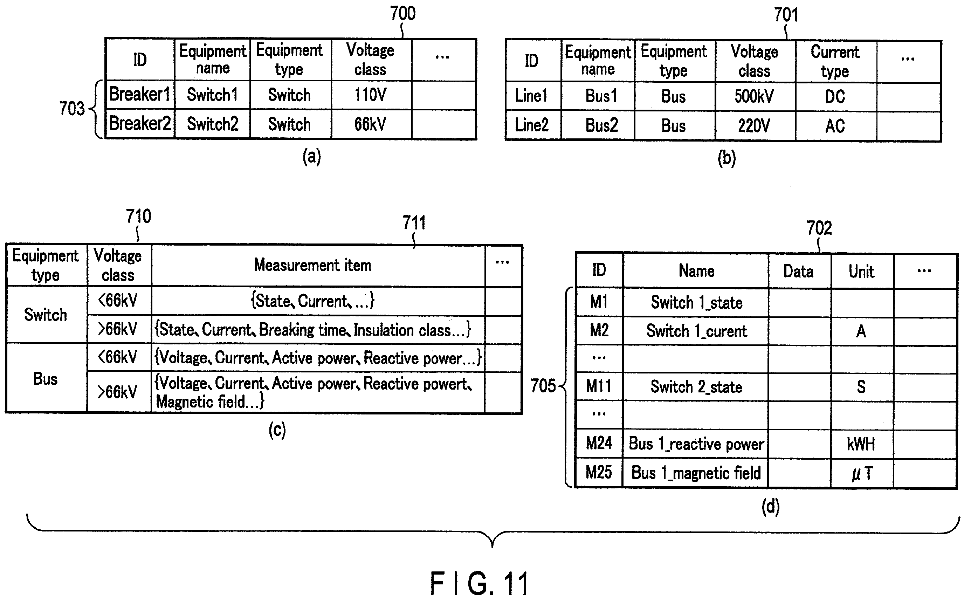

FIG. 11 shows views illustrating, using a table format, examples of a plurality of instance data sheets managed by the data processing apparatus according to the third embodiment.

In this embodiment, instance data are assumed to be classified into "equipment data" of equipment that really exists in a power grid system, "measured value data" monitored and controlled in each piece of equipment, and "topology data" that describes connection information of equipment.

In addition, instance data sheets are assumed to be classified into an equipment instance data sheet, a measured value instance data sheet, and a topology instance data sheet and stored in a power grid DB 18.

The equipment instance data sheet is a sheet used to describe various kinds of information of equipment such as a transformer, a switch, or a power transmission line of an electric power system as instances. These data sheets are arrayed for each equipment type and kept together on one data sheet.

In the equipment instance data sheet, an equipment class is defined for each equipment type. In addition, a column of the equipment instance data sheet is defined using a property defined by each equipment class or a property inherited from a superclass.

A table 700 shown in (a) of FIG. 11 illustrates an example of the equipment instance data sheet of "switch". A table 701 shown in (b) of FIG. 11 illustrates an example of the equipment instance data sheet of "bus" that defines a transmission/distribution line.

The measured value instance data sheet is a sheet used to describe data of various kinds of measured values of the electric power system as instances. The measured value instance data sheets are arrayed for each data type and kept together on one data sheet.

Examples of data are binary data (Discrete, data formed from 0 and 1), numerical data (Analog), integrated data (Accumulator), and calculated data (Calculated).

In the measured value instance data sheet, a measured value class is defined for each data type. In addition, a column of the measured value instance data sheet is defined using a property defined by each measured value class or a property inherited from a superclass. A table 702 shown in (d) of FIG. 11 illustrates an example of the measured value instance data sheet of numerical data (Analog).

The measurement item of equipment on the equipment instance data sheet changes depending on the equipment type and the installation condition. The installation condition is, for example, information of a voltage class in which equipment in installed and regional information (information of snow, thunder, earthquake, or the like).

A table 710 shown in (c) of FIG. 11 illustrates a definition example of measurement items by a voltage class (for example, classified into a voltage of 66 kV or more and a voltage less than 66 kV) for a switch or a bus as equipment. The measurement items may change, as a matter of course.

In this embodiment, automatically generating a data item (for example, name) of the measured value instance data sheet by an automatic instance generation unit 7 by applying the measurement items defined in the above-described table 710 from individual instance data of the equipment instance data sheet using an equipment type or installation condition will be described.

In the example shown in FIG. 11, the automatic instance generation unit 7 reads out instance data of "equipment type" (for example, "switch 1" in the first row) and instance data of "voltage class" (for example, "110 V" in the first row) from each piece of instance data (corresponding to one row of the table) described in a column 703 of the table 700 shown in (a) of FIG. 11.

The automatic instance generation unit 7 reads out, for each row 703, a definition (for example, {state, current, breaking time, insulation class, ...}) of a measurement item 711 that matches the instance data of the equipment type or voltage class read out from the table 700 or 701 of the equipment instance data sheet out of the table 710 shown in (c) of FIG. 11.

Based on the readout definition, the automatic instance generation unit 7 generates the name (for example, "switch 1_state" or "switch 2_swiching time") of a measured value for an instance (for example, "switch 1" or "switch 2") corresponding to the equipment name shown in each row 703 of the table 700 or 701 of the equipment instance data sheet. The automatic instance generation unit 7 adds a unique ID to each row and writes it in a row 705 on the table 702 of the measured value instance data sheet. According to the embodiment, it is also possible to automatically generate other information such as the name or unit of each measured value, as a matter of course.

### (Fourth Embodiment)

The fourth embodiment will be described next.

In this embodiment, a part-whole subsumption relationship is defined between classes of different defined ontologies as well as an inheritance relationship (is-a). Information representing the subsumption relationship is stored in a power grid DB 18.

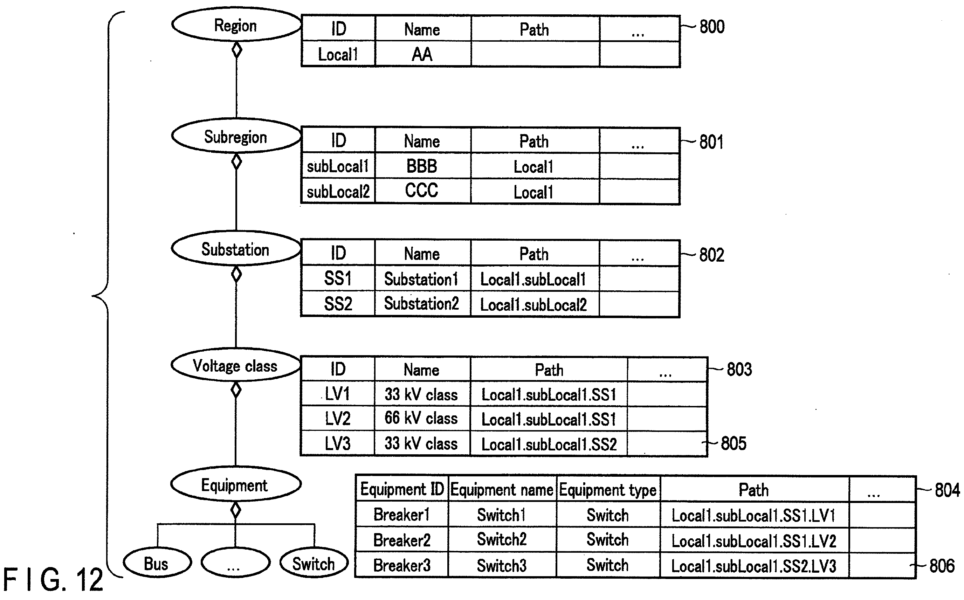

FIG. 12 is a view showing an example of the subsumption relationship between difference classes defined by a data processing apparatus according to the fourth embodiment.

In the example shown in FIG. 12, first, between the "region" class and the "subregion" class, the "region" class is a whole class, and the "subregion" class is a part class.

Second, between the "subregion" class and the "substation" class, the "subregion" class is a whole class, and the "substation" class is a part class.

Third, between the "substation" class and the "voltage class" class, the "substation" class is a whole class, and the "voltage class" class is a part class.

Fourth, between the "voltage class" class and the "equipment" class, the "voltage class" class is a whole class, and the "equipment" class is a part class.

Fifth, between the "equipment" class and the class of each piece of equipment such as "bus" or "switch", the "equipment" class is a whole class, and the class of each piece of equipment is a part class.

In FIG. 12, the "part-whole" relationship from the part class "subregion" to the whole class "region" is represented using a hollow diamond. The relationship between different classes using another hollow diamond is also the "part-whole" relationship.

As shown in FIG. 12, the "region" class is provided with an instance table 800 of this class. The "subregion" class is provided with an instance table 801 of this class. The "substation" class is provided with an instance table 802 of this class.

The "voltage class" class is provided with an instance table 803 of this class. The class of equipment such as "bus" or "switch" is provided with an instance table of the class of the equipment. FIG. 12 shows an instance table 804 of the class of "switch". By the part-whole subsumption relationship between different classes, the instances of the classes have a corresponding subsumption relationship.

More specifically, a subregion corresponding to the ID "subLocal1" or name "BBB" in the first row of the table 801 of "subregion" and a subregion corresponding to the ID "subLocal2" or name "CCC" in the second row are subregions in a region corresponding to the ID "Local1" in the table 800 of the superclass.

A substation corresponding to the ID "SS1" or name "substation 1" in the first row of the table 802 of "substation" is a substation in the subregion corresponding to the ID "subLocal1" in the first row of the table 801 of the superclass. A substation corresponding to the ID "SS2" or name "substation 2" in the second row of the table 802 is a substation in the subregion corresponding to the ID "subLocal2" in the second row of the table 801 of the superclass.

A voltage class corresponding to the ID "LV1" or name "33 kV class" in the first row of the table 803 of "voltage class" and a voltage class corresponding to the ID "LV2" or name "66 kV class" in the second row are the voltage classes of the substation corresponding to the substation corresponding to the ID "SS1" or name "substation 1" in the first row of the table 802 of the superclass. A voltage class corresponding to the ID "LV3" or name "33 kV class" in the third row of the table 803 of "voltage class" is the voltage class of the substation corresponding to the substation corresponding to the ID "SS2" or name "substation 2" in the second row of the table 802 of the superclass.

A switch corresponding to the ID "Breaker1" or equipment name "switch 1" in the first row of the table 804 of "switch" is a switch in which the voltage class corresponding to the ID "LV1" or name "33 kv class" in the first row of the table 803 of the superclass is set. A switch corresponding to the ID "Breaker2" or equipment name "switch 2" in the second row of the table 804 of "switch" is a switch in which the voltage class corresponding to the ID "LV2" or name "66 kV class" in the second row of the table 803 of the superclass is set. A switch corresponding to the ID "breaker3" or equipment name "switch 3" in the third row of the table 804 of "switch" is a switch in which the voltage class corresponding to the ID "LV3" or name "33 kV class" in the third row of the table 803 of the superclass is set. The pieces of information of the correspondence relationship between the rows of the tables are stored in the power grid DB 18.

In this embodiment, to make the "part-whole" relationship between different instance data definite, each instance table is provided with a property "Path" for access.

Automatic generation of instance data of "Path" for access using the ID of the instance data of a whole class subsuming the instance of a part class and the ID of the instance data of the whole class at the top will be described next.

Assume that the instance of a whole class A is created first. When creating instance data YY of a part class B, the automatic instance generation unit 7 detects the whole class A subsuming the part class B, and designates instance data XX of the whole class A. The automatic instance generation unit 7 thus generates the Path and ID of the designated instance XX as the instance data of "Path" of the instance data YY of the part class B.

This generation is applied to the "subregion" class and the "substation" class shown in FIG. 12. When creating instance data of the first row of the "substation class" as a part class, the automatic instance generation unit 7 reads out, from the power grid DB 18, information representing the "part-whole" subsumption relationship between the "subregion" class and the "substation" class and information representing the relationship between the rows of the instance data of the classes. As a result, the automatic instance generation unit 7 detects the "subregion" class as a whole class subsuming the "substation" class as a part class.

The automatic instance generation unit 7 detects the correspondence between the first row of the instance table 802 of the "substation" class and the first row of the instance table 801 of the "subregion" class. The automatic instance generation unit 7 reflects "Local1. subLocal1" that combines Path "Local1" and ID "subLocal1" in the first row of the instance table 801 of the "subregion" class as the instance of Path in the first row of the instance table 802 of the "substation" class.

The automatic instance generation unit 7 also detects the correspondence between the second row of the instance table 802 of the "substation" class and the second row of the instance table 801 of the "subregion" class. The automatic instance generation unit 7 reflects "Local1. subLocal2" that combines Path "Local1" and ID "subLocal2" in the second row of the instance table 801 of the "subregion" class as the instance of Path in the second row of the instance table 802 of the "substation" class.

In this embodiment, the format of the instance of Path in the instance table of each class can be set in advance. The remaining instances can be input from an instance input unit 8, for example, an input device. This input may be supported by causing an acquisition unit 13 to acquire data for synchronization from the power grid DB 18 and causing an instance input support unit 9 to give the acquired data to the instance input unit 8.

Generating the instance of Path based on the set format of the instance of Path will be described next.

In the above-described example, the automatic instance generation unit 7 generates the instance of Path of each class using an ID and Path on the instance table and also using an ID on the instance table of the whole class at the top. However, as another example, when generating the instance of Path of the instance table of a certain class, the automatic instance generation unit 7 may use IDs and Paths on the instance tables of classes of, for example, three upper layers.

In addition, the description format of Path can be set in advance. In the above-described example, "." is used as the delimiter between a plurality of IDs of the instance of Path. However, another delimiter, for example, "#" may be used in place of this delimiter.

### (Fifth embodiment)

The fifth embodiment will be described next.

In this embodiment, instance data are assumed to be classified into "equipment data" of equipment that really exists in a power grid system, "measured value data" monitored and controlled in each piece of equipment, and "topology data" that describes connection information of equipment.

In addition, instance data sheets are assumed to be classified into an equipment instance data sheet, a measured value instance data sheet, and a topology instance data sheet and stored in a power grid DB 18.

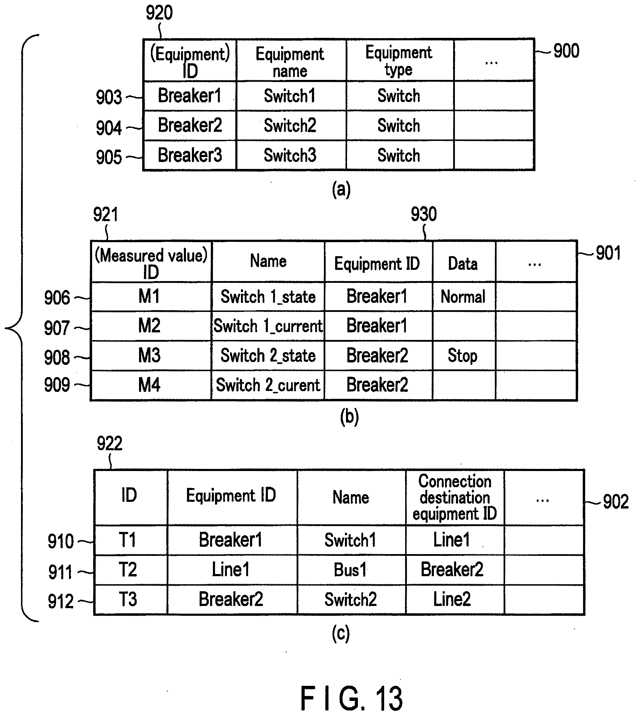

FIG. 13 shows views illustrating, using a table format, examples of various kinds of instance data sheets defined by a data processing apparatus according to the fifth embodiment.

In this embodiment, the instance data sheets are assumed to be classified into a table 900 of equipment instance data sheets as shown in (a) of FIG. 13, a table 901 of measured value instance data sheets as shown in (b) of FIG. 13, and a table 902 of topology instance data sheets as shown in (c) of FIG. 13.

The table 900 of equipment instance data sheets will be described first.

The table 900 shows instance data sheets of "switch" as an equipment class. Individual columns are formed from the properties of "switch" as an equipment class, and include instance data 903, 904, and 905 of the respective rows. The properties of the table 900 include a unique ID (equipment ID) 920, an equipment name (for example, switch 1, switch 2, and switch 2), and an equipment type (for example, switch).

The table 901 of measured value instance data sheets will be described next.

The table 901 shows instance data sheets of "measured values" as "numerical data". Individual columns are formed from properties associated with "numerical data", and include instance data 906, 907, 908, and 909 of the respective rows.

The properties of the table 901 include a unique ID (measured value ID) 921, a name (for example, switch 1_state, switch 1_current, switch 2_state, and switch 2_current), an equipment ID, and data (for example, normal and stop).

The table 902 of topology instance data sheets will be described next.

The table 902 of topology instance data sheets is formed from properties associated with connection of individual pieces of equipment, and includes instance data 910, 911, and 912 of the respective rows.

The properties of the table 902 include a unique ID 922, an equipment ID 931, a name (for example, switch 1, bus 1, and switch 2), and connection destination equipment ID (for example, Line 1, Breaker 2, and Line 2).

The values of the IDs 920, 921, and 922 of the sheets are automatically generated as unique IDs when inputting instance data and are unchangeable.

An equipment ID 930 as a property is further defined in the table 901 of measured value instance data sheets. The equipment ID is an ID used to identify from which equipment the data is measured. As the equipment ID of each row of the table 901 of measured value instance data sheets, the ID 920 of the measurement source in the table 901 of equipment instance data sheets is referred to.

The table 902 of topology instance data sheets is provided with the equipment ID 931 that is a property used to describe connection information between different pieces of equipment. As the equipment ID of each row of the table 902, the ID 920 of equipment of the connection destination in the table 901 of equipment instance data sheets is referred to.

In this embodiment, the reference relationship between the instance data of the sheets is managed. Additionally, in this embodiment, when equipment instance data is changed, measured value instance data and topology instance data are updated. In this embodiment, updated equipment instance data can be discriminated from other equipment instance data. In this embodiment, updated measured value instance data can be discriminated from other measured value data. In this embodiment, updated topology data can be discriminated from other topology data.

Detecting corresponding items of the table 901 of measured value instance data sheets and the table 902 of topology instance data sheets and updating the items as needed when instance data in the table 900 of the equipment instance data sheets is updated will be described first.

For example, "Beaker 1" that is the equipment ID of the instance data 903 in the first row of the table 900 of equipment instance data sheets is unchangeable. In this embodiment, instance data can be identified using the value of the equipment ID.

For example, in a case where the value of a property "equipment name" of the instance 903 is changed, for example, "switch 1" is changed to "disconnect switch 1", a data updating unit 6 specifies the equipment ID (for example, "Breaker 1") associated with the equipment name in the same row.

The data updating unit 6 specifies the instances 906 and 907 in which the same equipment ID is described in the table 901 of measured value instance data sheets. The data updating unit 6 specifies names (for example, "switch 1_state" and "switch 1_current") set in these instances.

To cope with updating of the equipment name from "switch 1" to "disconnect switch 1" in the table 900 of equipment instance data sheets, as described above, the data updating unit 6 automatically updates the name "switch 1_state" of the instance 906 to, for example, "disconnect switch 1_curent". The data updating unit 6 automatically updates the name "switch 1_state" of the instance 907 to, for example, "disconnect switch 1_curent".

Similarly, the data updating unit 6 specifies the instance 910 in which the equipment ID changed in the table 900 of equipment instance data sheets is described in the table 902 of topology instance data sheets. The data updating unit 6 specifies a name (for example, "switch 1") set in this instance.

To cope with updating of the equipment name from "switch 1" to "disconnect switch 1" in the table 900 of equipment instance data sheets, as described above, the data updating unit 6 updates the name "switch 1" of the instance 910 to, for example, "disconnect switch 1".

To discriminate a changed instance from other unchanged instances in each instance data sheet, the data updating unit 6 may add a change tag, or the changed instance may be displayed in another color.

### (Sixth embodiment)

The sixth embodiment will be described next.

Measured value instance data sheets are classified into different instance data sheets by the type of a measured value. Each measured value data is described in an instance data sheet that matches the type of the measured value.

Instance data of binary data (Discrete) or numerical data (Analog) can directly be measured from an electric power system. Integrated data (Accumulator) or calculated data (Calculated) is sometimes calculated using binary data or numerical data. This embodiment provides a method of calculating integrated data or calculated data.

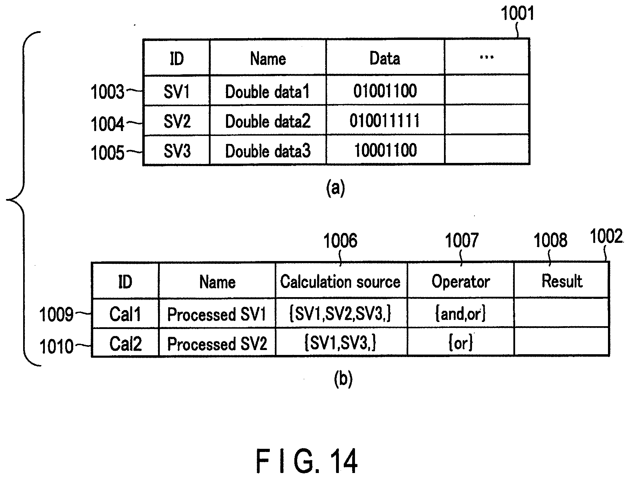

FIG. 14 shows views illustrating, using a table format, examples of instance data sheets defined by a data processing apparatus according to the sixth embodiment.

In FIG. 14, (a) shows an example of an instance data sheet 1001 of binary data. In FIG. 14, (b) shows an example of an instance data sheet 1002 of calculated data.

The instance data sheet 1001 of binary data is provided with properties such as a unique ID (for example, SV1, SV2, and SV3), a name (for example, binary data 1, binary data 2, and binary data 3), and data, and includes instance data 1003, 1004, and 1005 of the respective rows.

The instance data sheet 1002 of calculated data is provided with properties such as a unique ID (for example, Call and Cal2), a name (for example, processed SV1 and processed SV2), a calculation source 1006, an operator 1007, and a result 1008, and includes instance data 1009 and 1010 of the respective rows.

An ID associated with at least one piece of data of calculation sources in the instance data sheet 1001 of binary data is described in the calculation source 1006.

For example, when obtaining a calculation result in the instance 1009 of the instance data sheet 1002 of calculated data using the data of the instances 1003, 1004, and 1005 on the instance data sheet 1001 of binary data as calculation sources, the IDs (for example, {SV1, SV2, SV3}) of these instances are described in the calculation source of the instance 1009 as an ID list.

The operator 1007 is a property to describe an operator (for example, {and, or}). The operators are described in association with the above-described "calculation source" properties in the order of description of the calculation sources. The result 1008 is a property to save a calculation result.

The ID list {SV1, SV2, SV3} of calculation sources is described in the instance 1009 of the instance data sheet 1002 of calculated data as the calculation source 1006. An operator list {and, or} is described in the operator 1007.

According to these descriptions, an automatic instance generation unit 7 automatically calculates a formula "SV1 and SV2 or SV3". The automatic instance generation unit 7 calculates various kinds of data in accordance with the formula using data corresponding to the IDs "SV1", "SV2", and "SV3" on the instance data sheet 1001 of binary data. The automatic instance generation unit 7 saves the calculation result in the column of the result 1008.

In this embodiment, calculating various kinds of data by sequentially applying the operator to the calculation source has been described. However, a description to preferentially calculate may be added to the description of the ID list of calculation sources. For example, if the calculation source 1006 is described as {SV1, (SV2, SV3)}, the automatic instance generation unit 7 can generate a formula "SV1 and (SV2 or SV3)". Hence, a calculation with an extended function can be performed.

In this embodiment, binary data has been described as an example of the calculation source. Similarly, integrated data or numerical data (Analog) may be used as the calculation source data, and "+, -, *, /" may be used as the operators.

### (Seventh embodiment)

The seventh embodiment will be described next.

In this embodiment, saving instance data input on an equipment instance data sheet, a measured value instance data sheet, or a topology instance data sheet in a database will be described.

A table 803 of instance data sheets of a class "voltage class" and a table 804 of instance data sheets of a class "switch" described in the fourth embodiment will be used as an example.

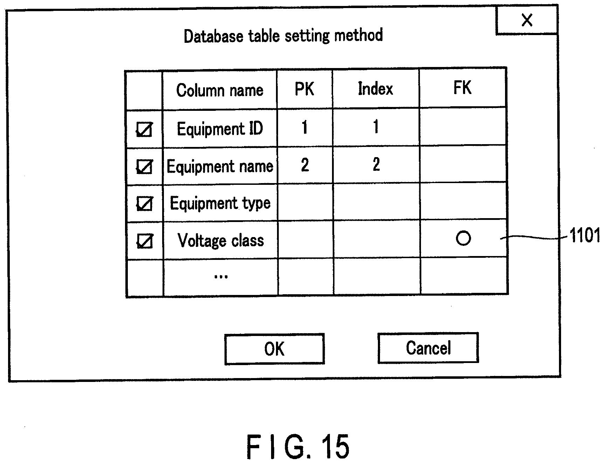

FIG. 15 shows an example of setting for generating a database table to be generated by a data processing apparatus according to the seventh embodiment.

As shown in FIG. 1, a DB connection unit 10 is connected to a power grid DB 18. Column names (property names) of individual instance data sheets are column candidates of a database table 1101. A table generation unit 11 generates the database table 1101 using, out of the candidates, columns whose checkboxes are arbitrarily selected, as shown in FIG. 15.

The table generation unit 11 also automatically designates an ID column (for example, equipment ID) as a primary key (PK: information used to uniquely identify a certain data set in the database). The table generation unit 11 also automatically designates an "external reference type" column to refer to another column as an external key (FK).

For example, for a "voltage class" column in a table 700 of equipment instance data sheets described in the third embodiment, data in an instance data sheet that defines the voltage class is referred to. When creating the database table 1101, the table generation unit 11 designates the column as the external key (FK) of the table, as shown in the table 1101, and refers to an ID column in a table 711 that saves the instance data of "voltage class".

The table generation unit 11 sets a primary key or an index for the set column, and creates the database table 1101 in accordance with the set contents.

A DB introduction unit 12 stores the created database table 1101 in the power grid DB 18.

To identify the database table 1101 in a one-to-one correspondence with an instance data sheet, the table name of the database table 1101 may use the same ID as that in the data sheet.

For a data record saved in the database table 1101, the table generation unit 11 can use the same unique ID as that of instance data in the instance data sheet. Hence, when the instance data in the instance data sheet is updated, the table generation unit 11 can overwrite a data record with the same ID as that saved in the database table 1101. If a data record having the same ID does not exist in the database table 1101, the table generation unit 11 can newly insert the instance data to the database table 1101.

Conversely, when a data record in the database table 1101 is updated, the table generation unit 11 can update instance data with the same ID as that in a corresponding instance data sheet or add data.

### (Eighth embodiment)

The eighth embodiment will be described next.

In this embodiment, acquiring instance data of a class of each layer subsumed in a designated class will be described.

In this embodiment, assume that a part-whole subsumption relationship is defined between classes of different defined ontologies as well as an inheritance relationship (is-a), and information representing the subsumption relationship is stored in a power grid DB 18, as in the fourth embodiment.

As the first example of acquisition, an acquisition unit 13 sets a designated class A as a whole class and acquires a part class B of the class A from the power grid DB 18 using the "part-whole" relationship between different classes.

As the second example of acquisition, the class B is set as a whole class. The acquisition unit 13 acquires a part class C of the class B from the power grid DB 18, and repetitively performs the operation. The acquisition unit 13 acquires all classes from the power grid DB 18 until part classes as subclasses exist no longer, and acquires the instance data of the acquired classes from the power grid DB 18.

For example, in a class structure using the "part-whole" relationship shown in FIG. 12, when acquiring instance data of the designated class A (for example, "substation"), the acquisition unit 13 acquires the class B (for example, "voltage class" class) subsumed by the class A from the power grid DB 18.

In addition, the acquisition unit 13 acquires the class C (for example, "equipment" class) subsumed by the class B from the power grid DB 18.

The acquisition unit 13 also acquires all classes (for example, "bus", "switch", and the like) subsumed by the class C from the power grid DB 18. The instance data of all of the thus acquired classes are set as the instance data of the designated class A.

If another narrow-down condition is designated, for example, if a narrow-down condition to acquire only instance data that matches "substation 1" from the "substation" class is designated, the acquisition unit 13 first acquires all classes subsumed by the "substation" class from the power grid DB 18, as described above. Then, the acquisition unit 13 acquires, from the power grid DB 18, only instance data that matches "substation 1" out of the instance data of the class.

In the example shown in FIG. 12, instance data that matches "substation 2" out of the "substation" class is not acquired. Hence, out of the instance data of the subclass, instance data 805 and 806 to refer to instance data that matches "substation 2" are not acquired, either.

In this embodiment, equipment instance data has been described as an example. However, the present invention is not limited to this. For measured value instance data, the acquisition unit 13 may acquire, from the power grid DB 18, measured value instance data that matches a condition in the same way as described above.

Note that the method described in each of the aforementioned embodiments can be stored in a storage medium such as a magnetic disk (a floppy® disk, a hard disk, or the like), an optical disk (a CD-ROM, a DVD, or the like), a magnetooptical disk (MO), or a semiconductor memory as a program executable by a computer, and can be distributed.

Any storage format may be adopted as long as the storage medium can store a program, and is readable by the computer.

An OS (Operating System) operating on the computer, MW (middleware) such as database management software or network software, or the like may execute part of each process for implementing the aforementioned embodiments based on the instruction of the program installed from the storage medium to the computer.

The storage medium according to each of the embodiments is not limited to a medium independent of the computer, and also includes a storage medium that stores or temporarily stores the program transmitted by a LAN, the Internet, or the like by downloading it.

The number of storage media is not limited to one. The storage medium according to the present invention also incorporates a case in which the processing of each of the aforementioned embodiments is executed from a plurality of media, and the media can have any arrangement. Note that the computer according to each of the embodiments is configured to execute each process of each of the aforementioned embodiments based on the program stored in the storage medium, and may be, for example, a single device formed from a personal computer or a system including a plurality of devices connected via a network.

The computer according to each of the embodiments is not limited to a personal computer, and also includes an arithmetic processing device or microcomputer included in an information processing apparatus. The term "computer" collectively indicates apparatuses and devices capable of implementing the functions of the present invention by the program.

While a certain embodiment has been described, this embodiment has been presented by way of example only, and is not intended to limit the scope of the inventions. Indeed, the novel embodiment described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### Reference Signs List

1...ontology creation unit; 2...transformation rule generation unit; 3...class selection unit; 4...property selection unit; 5...instance input sheet creation unit; 6...data updating unit; 7...automatic instance generation unit; 8...instance input unit; 9...instance input support unit; 10...DB connection unit; 11...table generation unit; 12...DB introduction unit; 13...acquisition unit; 14...transformation destination ontology designation unit; 15...transformation rule detection unit; 16...instance transformation unit; 17...data output unit; 18...power grid DB

## Claims

1. A data processing apparatus **characterized by** comprising:
a storage device (18) configured to store an ontology including hierarchical classes, a property defined by each of the classes, in which each of the class and the property includes attributes of unique identification information and version information; and
an instance creation unit (5) configured to create a data sheet used to input an instance of a predetermined class using a property defined by the predetermined class and including the identification information and the version information and a property inherited from a class of an upper layer of the predetermined class and including the identification information and the version information.

2. The data processing apparatus of claim 1, **characterized by** further comprising a rule generation unit (2) configured to, based on a first determination result representing whether a class defined by a first ontology is also defined by a second ontology different from the first ontology, a second determination result representing, in a case where the class defined by the first ontology is also defined by the second ontology, whether identification information of a property defined by the class defined by the first ontology is also defined by the second ontology, and a third determination result representing, in a case where the identification information of the property defined by the class defined by the first ontology is also defined by the second ontology, whether a version of the property is the same between the first ontology and the second ontology, generate a rule used to apply an instance of a class that defines the property defined by the first ontology to an instance of the same class defined by the second ontology.

3. The data processing apparatus of claim 2, **characterized in that** in the case where the identification information of the property defined by the class defined by the first ontology is also defined by the second ontology, the rule generation unit (2) generate the rule based on a unit of an attribute that defines the property and/or a unit prefix of the attribute, and/or a determination result of comparison of a data type of the attribute between the first ontology and the second ontology.

4. The data processing apparatus of claim 1, **characterized in that** the storage device (18) stores a first table configured to input an instance of a first type, a second table configured to input an instance of a second type, and a third table configured to define an item and a condition defined in the second table by an instance item of the first table, and
the data processing apparatus further comprises an automatic instance generation unit (7) configured to acquire, from the third table, details of a predetermined item in the first table, and generate a value of a predetermined item of the second table based on an acquisition result.

5. The data processing apparatus of claim 1, **characterized in that** the class defined by the ontology is formed from a plurality of types of hierarchical classes,
the storage device (18) stores a table configured to input an instance of a class of each layer, and
the data processing apparatus further comprises an automatic instance generation unit (7) configured to refer, from a predetermined instance in a class of a lower layer, to the predetermined instance in a class of an upper layer subsuming (having a part-whole relationship) the class in which the instance is located, and generate a value of an item to refer to the class of the upper layer in the table configured to input the predetermined instance.

6. The data processing apparatus of claim 1, **characterized in that** the instance comprises an instance of a first type including unique identification information and an instance of a second type including reference information of the instance of the first type,
the reference information is the identification information of the instance of the first type, and
the data processing apparatus further comprises an updating unit (6) configured to automatically update a value of the instance of the second type that refers to the instance of the first type in accordance with a change in a value of the instance of the first type.

7. The data processing apparatus of claim 6, **characterized in that** the updating unit (6) records that the value of the instance of the second type, which is changed in accordance with the change in the value of the instance of the first type is a changed value.

8. The data processing apparatus of claim 5, **characterized in that** the storage device (18) stores an instance of a first type including unique identification information and numerical data, a list of identification information of an instance used to calculate predetermined instance data, a list of an operator used to calculate the instance data, and an instance of a second type capable of describing a calculation result of the instance data, and
the automatic instance generation unit (7) calculates the instance data by sequentially applying the list of the described operator to the list of the identification information described by the instance of the second type.

9. The data processing apparatus of claim 1, **characterized by** further comprising a table generation unit (11) configured to automatically generate a table of a database by setting items of the data sheet as candidates of a table item of the database, automatically setting an identification information item of an instance of the data sheet as a primary key for an item selected from the candidates, automatically setting an external reference type item used to refer to another instance as an external key for the selected item, and setting an item of an index for the selected item.

10. The data processing apparatus of claim 9, **characterized in that** the table generation unit (11)
adds pieces of identical identification information to the created table of the database and an instance data sheet that is a source of the table of the database,
adds pieces of identical identification information to individual instance data of the instance data sheet and individual data records of the table of the database,
when the instance data in the data sheet is updated, updates a data record of the table of the database to which the same identification information as the identification information of the instance is added, and
when the data record in the table of the database is updated, updates instance data of the instance data sheet to which the same identification information as the identification information of the data record is added.

11. The data processing apparatus of claim 5, **characterized in that** the class defined by the ontology is formed from a plurality of types of hierarchical classes, and
the data processing apparatus further comprises an acquisition unit (13) configured to designate a hierarchical class and/or a condition of an instance and acquires an instance of each hierarchical class included in the hierarchical class in accordance with the designated condition.

12. A data processing method applied to a data processing apparatus including a storage device (18) configured to store an ontology including hierarchical classes, a property defined by each of the classes, in which each of the class and the property includes attributes of unique identification information and version information, **characterized by** comprising:
creating a data sheet used to input an instance of a predetermined class using a property defined by the predetermined class and including the identification information and the version information and a property inherited from a class of an upper layer of the predetermined class and including the identification information and the version information.
